# FASCICULE DE BREVET EUROPEEN

(11) **EP 3 127 179 B1**
(45) Date de publication et mention de la délivrance du brevet: **11.04.2018**
(21) Numéro de dépôt: 15714568.1
(22) Date de dépôt: 04.03.2015
(51) Int. Cl.: H01M 8/0228, H01M 8/0226, H01M 8/1018

(54) **PILE A COMBUSTIBLE A FONCTIONNEMENT OPTIMISE**
BRENNSTOFFZELLE MIT OPTIMIERTEM BETRIEB
FUEL CELL WITH OPTIMIZED OPERATION

(30) Priorité: 31.03.2014 FR 1452843
(43) Date de publication de la demande: 08.02.2017
(73) Titulaire: Commissariat à l'Énergie Atomique et aux Énergies Alternatives, 75015 Paris (FR)
(72) Inventeur: GERARD, Mathias, F-38100 Grenoble (FR); LE GALLO, Patrick, F-38160 Saint Appolinard (FR); SCHOTT, Pascal, F-38250 Villard De Lans (FR); VINCENT, Rémi, F-38000 Grenoble (FR)
(74) Mandataire: GIE Innovation Competence Group
(86) Numéro de dépôt international: PCT/FR2015/050532
(87) Numéro de publication internationale: WO 2015/150652

(56) Documents cités:
- FR-A1- 2 976 732
- US-A1- 2005 277 009
- US-A1- 2006 099 481
- US-A1- 2010 009 229

## Description

L'invention concerne les piles à combustible, et en particulier la collecte du courant électrique dans les piles à combustible. La demande de brevet FR2976732 décrit une pile à combustible dans laquelle la collecte du courant électrique est ajustée localement de manière variable. Les piles à combustible sont envisagées comme système d'alimentation électrique pour des véhicules automobiles produits à grande échelle dans le futur, ainsi que pour un grand nombre d'applications. Une pile à combustible est un dispositif électrochimique qui convertit de l'énergie chimique directement en énergie électrique. Du dihydrogène est habituellement utilisé comme carburant de la pile à combustible. Le dihydrogène est oxydé sur une électrode de la pile (l'anode) et du dioxygène de l'air est réduit sur une autre électrode de la pile (la cathode). La réaction électrochimique produit de l'eau au niveau de la cathode, de l'oxygène étant réduit et réagissant avec les protons. Le grand avantage de la pile à combustible est d'éviter des rejets de composés polluants atmosphériques sur le lieu de génération d'électricité.

Par exemple, les piles à combustible à membrane d'échange de protons, dites PEM, présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, le dihydrogène est oxydé pour produire des protons traversant la membrane. Les électrons produits par cette réaction migrent vers une plaque collectrice ou plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques d'écoulement, par exemple en métal, empilées les unes sur les autres. L'AME est disposé entre deux plaques d'écoulement. Les plaques d'écoulement peuvent comprendre des canaux et orifices d'écoulement pour guider les réactifs et les produits vers/depuis la membrane. Les plaques sont également électriquement conductrices pour former des collecteurs des électrons générés au niveau de l'anode et pour conduire ces électrons jusqu'à la cathode d'une cellule adjacente. Des couches de diffusion gazeuse (pour Gaz Diffusion Layer en langue anglaise) sont interposées entre les électrodes et les plaques d'écoulement et sont en contact avec les plaques d'écoulement.

Les AME présentent un fonctionnement hétérogène sur la longueur des canaux d'écoulement d'air et d'hydrogène. Du côté de la cathode par exemple, l'évolution de l'humidité relative des gaz entre l'entrée (conditions asséchantes) et la sortie (conditions de noyage) du canal d'écoulement a une incidence sur l'hétérogénéité de la densité de courant. La densité de courant peut être plus faible à l'entrée du canal d'écoulement du fait d'une humidité insuffisante. La densité de courant est également plus faible à la sortie du canal d'écoulement, du fait d'une humidité excessive pouvant noyer l'AME et du fait d'un appauvrissement de l'oxygène. Cette hétérogénéité de densité de courant peut favoriser la corrosion localisée du carbone d'une couche de diffusion gazeuse, la dégradation de la membrane et/ou des électrodes. Cette hétérogénéité de densité de courant aboutit également à une nécessité d'une plus grande quantité de catalyseur et aboutit à un impact non négligeable sur le coût de la pile à combustible.

L'invention vise à résoudre cet inconvénient et à proposer une solution alternative à ce problème technique. L'invention porte ainsi sur une pile à combustible telle que définie dans les revendications annexées.

L'invention porte en outre sur un procédé de fabrication d'une pile à combustible, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple de pile à combustible ;
- la figure 2 est une vue de dessus d'une plaque bipolaire comportant un exemple de tracé de canal d'écoulement ;
- la figure 3 est une vue d'une plaque bipolaire pour un exemple de pile à combustible selon l'invention, selon une coupe transversale de canaux d'écoulement ;
- la figure 4 est un schéma électrique équivalent de la plaque bipolaire de la figure 3 ;
- la figure 5 est un diagramme de la densité de courant à travers une plaque bipolaire d'une pile à combustible selon l'état de la technique en fonction de la position entre une entrée et une sortie d'un canal d'écoulement ;
- la figure 6 est un diagramme de la conductivité d'un revêtement de plaque bipolaire selon l'invention en fonction de la position entre une entrée et une sortie d'un canal d'écoulement ;
- la figure 7 est un diagramme de la densité de courant à travers une plaque bipolaire d'une pile à combustible selon l'invention en fonction de la position entre une entrée et une sortie d'un canal d'écoulement ;
- la figure 8 est un logigramme d'un exemple de procédé de fabrication d'une pile à combustible.

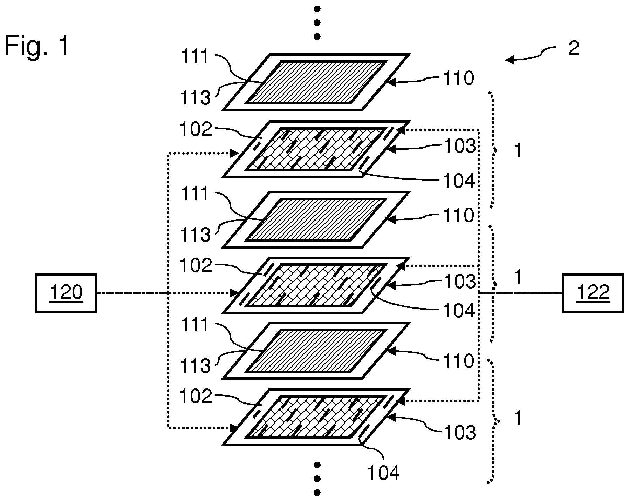

La figure 1 est une vue en perspective éclatée schématique d'un empilement de cellules 1 d'une pile à combustible 2. La pile à combustible 2 comprend plusieurs cellules 1 superposées. Les cellules 1 sont du type à membrane échangeuse de protons ou membrane à électrolyte polymère.

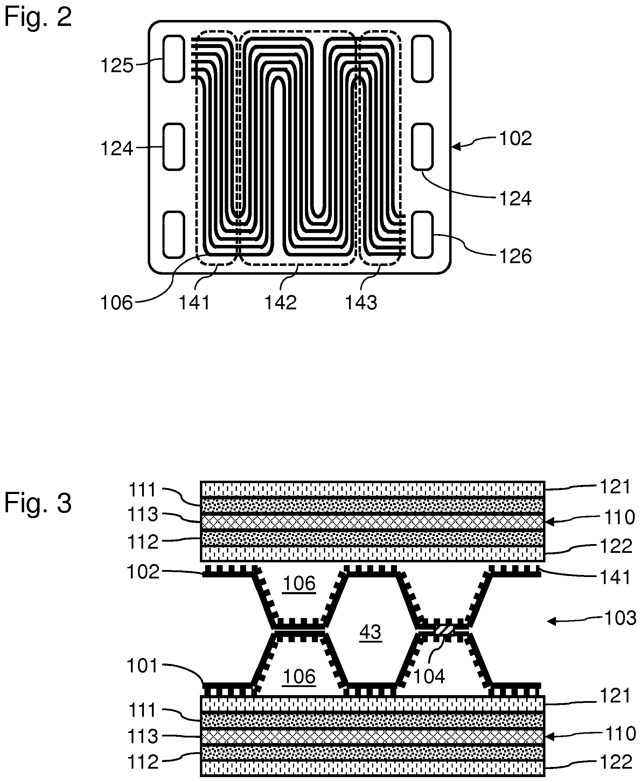

La pile à combustible 2 comprend une source de carburant 120 alimentant en dihydrogène une entrée de chaque cellule 1. La pile à combustible 2 comprend également une source d'air 122 alimentant une entrée de chaque cellule en air, contenant de l'oxygène utilisé comme oxydant. Chaque cellule 1 comprend également des canaux d'échappement. Chaque cellule 1 peut également présenter un circuit de refroidissement (illustré à la figure 2).

Chaque cellule 1 comprend un assemblage membrane/électrodes 110. La pile à combustible 2 illustrée comprend notamment des assemblages membrane/électrodes ou AME 110. Un assemblage membrane/électrodes 110 comprend un électrolyte 113, une cathode 112 (non illustrée à la figure 1) et une anode 111 placées de part et d'autre de l'électrolyte et fixées sur cet électrolyte 113.

Entre chaque couple d'AME adjacents, un couple de guides d'écoulement est disposé. Chaque guide d'écoulement est par exemple formé d'une feuille métallique, usuellement en acier inoxydable. Les guides d'écoulement de chaque couple sont ici solidaires pour former une plaque bipolaire 103. Une plaque bipolaire 103 comprend ici une feuille métallique 102 orientée vers une cathode d'une AME 110 et une feuille métallique 101 (non illustrée à la figure 1) orientée vers une anode d'une autre AME 110. Les feuilles métalliques 101 et 102 comportent des surfaces en relief définissant des canaux d'écoulement 106 (non illustrés à la figure 1). Les feuilles métalliques 101 et 102 sont solidarisées par des soudures 104. La combinaison des feuilles métalliques 101 et 102 forme un support conducteur.

De façon connue en soi, durant le fonctionnement de la cellule 1, de l'air s'écoule entre l'AME et la feuille métallique 102, et du dihydrogène s'écoule entre l'AME et la feuille métallique 101. Au niveau de l'anode 111, le dihydrogène est oxydé pour produire des protons qui traversent l'AME. Les électrons produits par cette réaction sont collectés par la feuille métallique 102. Les électrons produits sont ensuite appliqués sur une charge électrique connectée à la pile à combustible 2 pour former un courant électrique. Au niveau de la cathode 112, de l'oxygène est réduit et réagit avec les protons pour former de l'eau. Les réactions au niveau de l'anode et de la cathode sont régies comme suit :

H₂ → 2H⁺ + 2e⁻ au niveau de l'anode ;

4H⁺ + 4e⁻ + O₂ → 2H₂O au niveau de la cathode.

Durant son fonctionnement, une cellule de la pile à combustible génère usuellement une tension continue entre l'anode et la cathode de l'ordre de 0.7V. Le matériau catalyseur utilisé à l'anode 111 ou à la cathode 112 est avantageusement du platine, pour ses excellentes performances catalytiques.

La figure 2 est une vue de dessus d'un exemple de feuille métallique 102 d'une pile à combustible 2. La feuille métallique 102 délimite des canaux d'écoulement 106 définissant des écoulements de fluide parallèles. Les canaux d'écoulement 106 s'étendent entre un conduit d'entrée d'air 125 et un conduit de sortie d'eau 126. La feuille métallique 102 est par ailleurs traversée par un conduit d'écoulement de liquide de refroidissement 124.

La figure 3 illustre la pile à combustible en coupe transversale au niveau de canaux d'écoulement. Une couche de diffusion gazeuse 122 est interposée de façon connue en soi entre la cathode 112 et la feuille métallique 102. Une couche de diffusion gazeuse 121 est interposée de façon connue en soi entre l'anode 111 et la feuille métallique 101. Des canaux de liquide de refroidissement 43 sont ici ménagés entre les feuilles métalliques 101 et 102.

Les canaux d'écoulement 106 définis dans la feuille métallique 102 du côté de la cathode 112 sont recouverts par plusieurs revêtements conducteurs. Les canaux d'écoulement 106 définis dans la feuille métallique 101 du côté de l'anode 111 sont également recouverts par plusieurs revêtements conducteurs. On peut également envisager que seule une face de la plaque bipolaire 103, du côté anode ou du côté cathode, soit recouverte de revêtements conducteurs.

La plaque bipolaire 103 comporte ici des revêtements conducteurs 141 à 143 fixés sur la feuille métallique 102 au niveau de ses canaux d'écoulement 106. Le revêtement conducteur 141 est fixé sur la feuille métallique 102 au niveau de l'entrée d'air des canaux d'écoulement 106, par exemple sur une longueur représentant avantageusement entre 5 et 15 % de la longueur de ces canaux d'écoulement. Le revêtement conducteur 142 est fixé sur la feuille métallique 102 au niveau d'une partie médiane des canaux d'écoulement 106, par exemple sur une longueur représentant avantageusement entre 25 et 50% de la longueur des canaux d'écoulement. Le revêtement conducteur 143 est fixé sur la feuille métallique 103 au niveau de la sortie d'eau des canaux d'écoulement 106, par exemple sur une longueur représentant avantageusement entre 5 et 15 % de la longueur de ces canaux d'écoulement.

Le revêtement conducteur 142 présente une résistance électrique surfacique supérieure à celle du revêtement conducteur 141, et une résistance électrique surfacique supérieure à celle du revêtement conducteur 143. En utilisant de telles différences de résistances électriques surfaciques le long des canaux d'écoulement 106, on peut accroître la densité de courant à travers la plaque bipolaire 103 au niveau de l'entrée d'air et au niveau de la sortie d'eau, et réduire la densité de courant à travers la plaque bipolaire 103 au niveau de sa partie médiane. Ainsi, on peut homogénéiser la densité de courant à travers la plaque bipolaire 103, et ainsi réduire sa dégradation dans le temps.

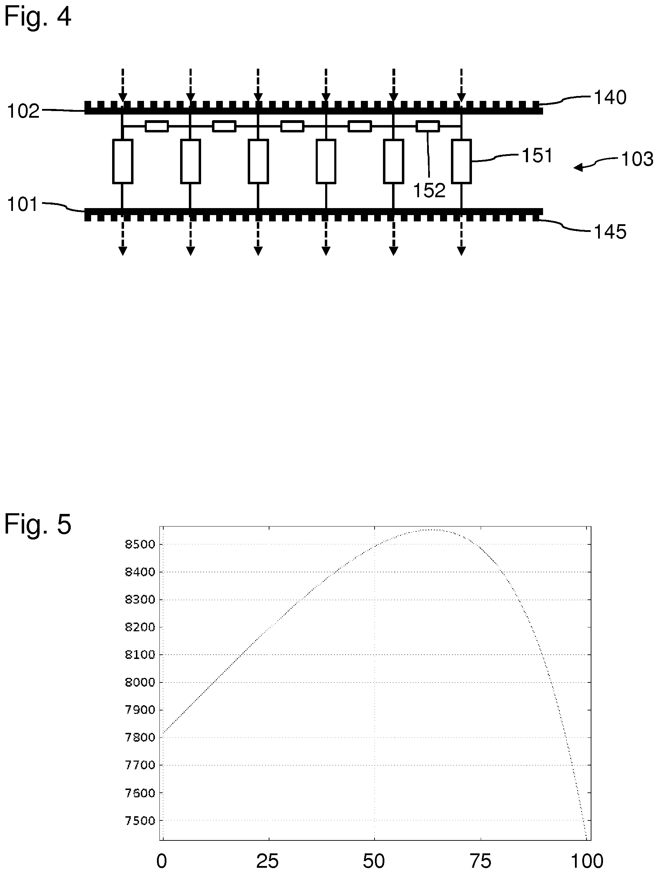

La figure 4 représente un schéma électrique équivalent de la plaque bipolaire 103. La couche 140 représente la combinaison des revêtements 141 à 143. La couche 145 représente la combinaison des revêtements conducteurs disposés sur la feuille métallique 101. Le support conducteur formé des feuilles métalliques 101 et 102 définit des jonctions électriques dans le plan de la plaque bipolaire 103, représentées par des résistances 152. Les différents revêtements des couches 140 et 145 induisent différentes jonctions électriques dans l'épaisseur de la plaque bipolaire 103, représentées par des résistances 151. Du fait des différences de résistance surfacique des différents revêtements conducteurs, les résistances 151 présentent différentes valeurs. Lors de l'application d'un courant à travers l'épaisseur de la plaque bipolaire 103, les différentes valeurs de résistance 151 induisent des courants transversaux à travers les résistances 152. Afin de favoriser des courants transversaux dans la plaque bipolaire 103, les revêtements conducteurs des couches 140 et 145 présentent avantageusement une résistivité au moins double de celle du support conducteur, ici formé des feuilles conductrices 101 et 102.

La figure 5 illustre un exemple de densité de courant à travers une plaque bipolaire de l'état de la technique présentant une résistance surfacique homogène, le long d'un canal d'écoulement. La position en abscisse est définie en pourcentage par rapport à la longueur d'un canal d'écoulement 106 entre son entrée d'air et sa sortie d'eau (on prend ici pour référence un canal d'écoulement du côté cathodique).

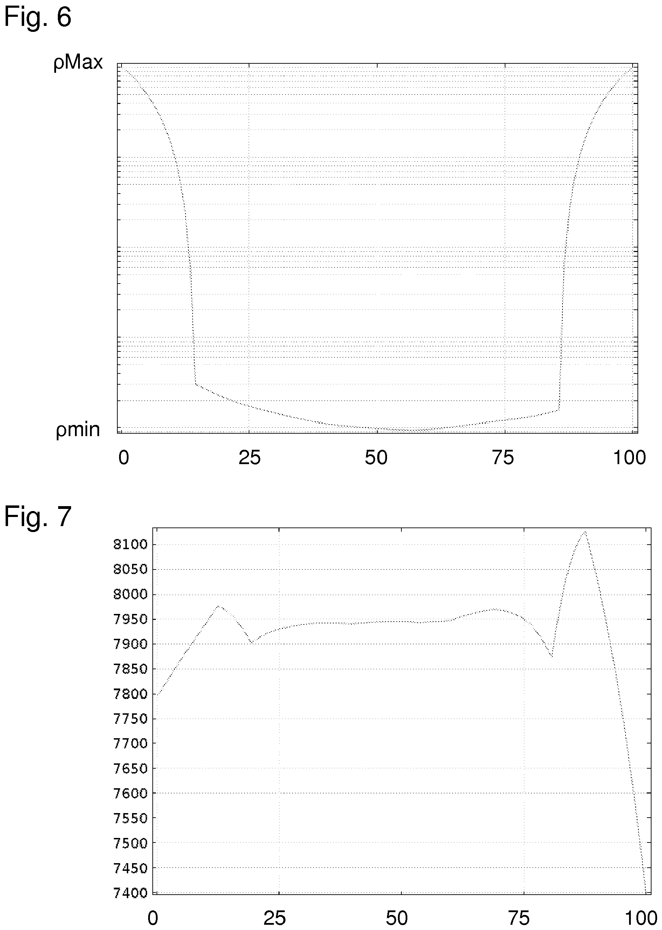

La figure 6 illustre un exemple de résistivité d'un matériau d'une couche fixée sur un canal d'écoulement 106, variant entre une valeur de résistivité pmin et une valeur pMax de résistivité le long d'un canal d'écoulement, l'ordonnée étant illustrée selon une échelle logarithmique. La couche ainsi formée peut présenter une épaisseur continue, de sorte que la résistance surfacique est ici proportionnelle à la résistivité locale du matériau de la couche. L'homme du métier saura former des zones locales du matériau de la couche pour obtenir les résistivités locales souhaitées pour cette couche.

La figure 7 illustre un exemple de densité de courant à travers une plaque bipolaire selon l'invention, dans laquelle la résistance surfacique au niveau de la partie médiane d'un canal d'écoulement est supérieure à la résistance surfacique au niveau des extrémités de ce canal d'écoulement. Par rapport au diagramme de densité de courant de la figure 5, on constate que la densité de courant est ici nettement plus homogène sur la longueur du canal d'écoulement.

Les revêtements fixés sur le support conducteur de la plaque bipolaire peuvent présenter une résistance surfacique homogène ou une résistance surfacique variant de façon continue. La partie médiane peut comprendre différents revêtements présentant chacun une résistance surfacique distincte.

De façon non limitative, les solutions suivantes peuvent être imaginées pour obtenir plusieurs revêtements présentant des résistances surfaciques différentes.

Par exemple, les différents revêtements peuvent inclure des matériaux présentant des conductivités différentes, par exemple de l'argent (environ 5mOhm/cm²), des nanotubes (environ 15mOhm/cm²), ou du graphite (environ 25mOhm/cm²).

Par ailleurs, on peut prévoir d'obtenir des résistances surfaciques différentes en utilisant des épaisseurs différentes pour les différents revêtements, en utilisant éventuellement différents revêtements présentant une même composition.

On peut également envisager de réaliser les revêtements sous forme de dépôts incluant une matrice polymère dans laquelle des particules conductrices sont noyées en quantité suffisante de façon à rendre le revêtement conducteur. Les différents revêtements peuvent être réalisés avec des proportions différentes d'une même matrice polymère et de mêmes particules conductrices.

Par exemple, on peut réaliser des dépôts de matrices polyuréthane incluant des particules de graphite, avec des proportions en poids comprises entre 30 et 70 % des particules de graphite (la proportion en poids de polyuréthane étant complémentaire). Un dépôt de matrice polyuréthane avec une proportion en poids de 30 % de particules de graphite présente typiquement une résistivité de 25mOhm/cm², un dépôt de matrice polyuréthane avec une proportion en poids de 70 % de particules de graphite présentant typiquement une résistivité de 60mOhm/cm².

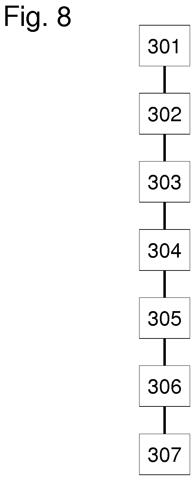

La figure 8 représente un logigramme des étapes mises en oeuvre dans un exemple de procédé de conception et de fabrication d'une pile à combustible selon l'invention.

Lors d'une étape 301 préalable de conception, une pile à combustible peut être assemblée avec des cellules électrochimiques et des plaques bipolaires selon l'état de la technique. En utilisant une carte d'acquisition des courants localisés, on détermine alors la répartition des densités de courant le long d'un canal d'écoulement 106. Une telle carte d'acquisition permet par exemple d'obtenir un diagramme tel que celui illustré à la figure 5. Les densités de courant déterminées tiennent ainsi compte de la variation de l'humidité relative le long du canal d'écoulement et de la variation de la teneur en oxygène le long du canal d'écoulement de cathode.

Sur la base des densités de courant déterminées le long du canal d'écoulement, on peut sélectionner des revêtements conducteurs à appliquer sur la plaque bipolaire le long du canal d'écoulement, afin d'homogénéiser la densité de courant à travers cette plaque bipolaire, lors d'une étape 302.

Lors d'une étape 303, deux feuilles métalliques embouties sont assemblées pour former un support conducteur d'une plaque bipolaire. Le support conducteur est identique à celui de la pile à combustible assemblée à l'étape 301.

Lors d'une étape 304, des revêtements conducteurs sont déposés sur une ou deux faces du support conducteur, et correspondent aux revêtements conducteurs sélectionnés. Cette étape peut par exemple être réalisée par des dépôts d'encres différents le long des canaux d'écoulement. Les encres peuvent inclure une matrice de matériau polymère incluant des particules conductrices.

Lors d'une étape 305, deux cellules électrochimiques de pile à combustible sont positionnées de part et d'autre de la plaque bipolaire, par exemple deux assemblages membrane/électrodes. Des couches de diffusion gazeuse peuvent être interposées entre les cellules électrochimiques et la plaque bipolaire. Les cellules électrochimiques et les couches de diffusion gazeuses sont identiques à ceux de la pile à combustible assemblée à l'étape 301.

Lors d'une étape 306, la fabrication de la pile à combustible est poursuivie, en formant un empilement avec d'autres cellules électrochimiques et d'autres plaques bipolaires, et en rapportant d'autres composants tels que des plots de centrage, des joints ou des plaques de serrage.

## Revendications

1. Pile à combustible (2), **caractérisée en ce qu'**elle comprend :
- des première et deuxième cellules électrochimiques (1) ;
- une plaque bipolaire (103) disposée entre les première et deuxième cellules électrochimiques, comprenant un support conducteur (101,102) délimitant un premier canal d'écoulement (106) en vis-à-vis de la première cellule électrochimique et s'étendant entre une entrée d'air (125) et une sortie d'eau (126), et comprenant un premier revêtement conducteur (141) fixé sur le support conducteur au niveau de l'entrée d'air du premier canal d'écoulement et comprenant un deuxième revêtement conducteur (142) fixé sur le support conducteur au niveau d'une partie médiane du premier canal d'écoulement, le deuxième revêtement conducteur présentant une résistance électrique surfacique supérieure à celle du premier revêtement conducteur.

2. Pile à combustible (2) selon la revendication 1, dans laquelle la plaque bipolaire (103) comprend un troisième revêtement conducteur (43) fixé sur le support conducteur (101,102) au niveau de la sortie d'eau du premier canal d'écoulement, le deuxième revêtement conducteur présentant une résistance électrique surfacique supérieure à celle du troisième revêtement conducteur.

3. Pile à combustible (2) selon la revendication 1 ou 2, dans laquelle lesdits revêtements conducteurs (141,142) incluent chacun une matrice polymère et des particules conductrices noyées dans la matrice polymère.

4. Pile à combustible selon la revendication 3, dans laquelle lesdits premier et deuxième revêtements conducteurs incluent une même matrice polymère et des mêmes particules conductrices dans des proportions différentes.

5. Pile à combustible selon l'une quelconque des revendications précédentes, dans laquelle le deuxième revêtement conducteur (142) présente une résistance électrique surfacique au moins double de celle du premier revêtement conducteur.

6. Pile à combustible selon l'une quelconque des revendications précédentes, dans laquelle lesdits revêtements conducteurs présentent une résistivité au moins double de la résistivité du support conducteur (101,102).

7. Pile à combustible selon l'une quelconque des revendications précédentes, dans lequel le premier canal d'écoulement (106) est en vis-à-vis d'une cathode (112) de la première cellule électrochimique.

8. Procédé de fabrication d'une pile à combustible, comprenant les étapes de :
- fournir une plaque bipolaire (103) comprenant un support conducteur (101,102) délimitant un premier canal d'écoulement (106) s'étendant entre une entrée d'air (125) et une sortie d'eau (126) ;
- fixer un premier revêtement conducteur (141) sur le support conducteur au niveau de l'entrée d'air du premier canal d'écoulement et fixer un deuxième revêtement conducteur (142) sur le support conducteur au niveau d'une partie médiane du premier canal d'écoulement, le deuxième revêtement conducteur présentant une résistance électrique surfacique supérieure à celle du premier revêtement conducteur ;
- disposer la plaque bipolaire entre des première et deuxième cellules électrochimiques (1), avec le premier canal d'écoulement en vis-à-vis de la première cellule électrochimique.

9. Procédé de fabrication d'une pile à combustible selon la revendication 8, dans lequel les fixations des premier et deuxième revêtements conducteurs incluent le dépôt de matrices polymère dans lesquelles des particules conductrices sont noyées.

10. Procédé de fabrication d'une pile à combustible selon la revendication 9, dans lequel lesdits premier et deuxième revêtements conducteurs incluent une même matrice polymère et des mêmes particules conductrices dans des proportions différentes.

## Patentansprüche

1. Brennstoffzelle (2), **dadurch gekennzeichnet, dass** sie Folgendes umfasst:
- ein erstes und ein zweites galvanisches Element (1);
- eine zwischen dem ersten und zweiten galvanischen Element angeordnete Bipolarplatte (103), umfassend einen leitenden Träger (101, 102), der einen sich zwischen einem Lufteintritt (125) und einem Wasseraustritt (126) erstreckenden ersten Strömungskanal (106) gegenüber dem ersten galvanischen Element abgrenzt, und umfassend eine auf dem leitenden Träger auf der Höhe des Lufteintritts des ersten Strömungskanals befestigte erste leitende Beschichtung (141) und umfassend eine auf dem leitenden Träger auf der Höhe eines Mittelteils des ersten Strömungskanals befestigte zweite leitende Beschichtung (142), wobei die zweite leitende Beschichtung einen elektrischen Oberflächenwiderstand aufweist, der größer als der der ersten leitenden Beschichtung ist.

2. Brennstoffzelle (2) nach Anspruch 1, wobei die Bipolarplatte (103) eine auf dem leitenden Träger (101, 102) auf der Höhe des Wasseraustritts des ersten Strömungskanals befestigte dritte leitende Beschichtung (43) umfasst, wobei die zweite leitende Beschichtung einen elektrischen Oberflächenwiderstand aufweist, der größer als der der dritten leitenden Beschichtung ist.

3. Brennstoffzelle (2) nach Anspruch 1 oder 2, wobei die leitenden Beschichtungen (141, 142) jeweils eine Polymermatrix und in die Polymermatrix eingebettete leitende Partikel umfassen.

4. Brennstoffzelle nach Anspruch 3, wobei die erste und zweite leitende Beschichtung eine gleiche Polymermatrix und gleiche leitende Partikel in unterschiedlichen Anteilen umfassen.

5. Brennstoffzelle nach einem der vorhergehenden Ansprüche, wobei die zweite leitende Beschichtung (142) einen elektrischen Oberflächenwiderstand aufweist, der wenigstens doppelt so groß wie der der ersten leitenden Beschichtung ist.

6. Brennstoffzelle nach einem der vorhergehenden Ansprüche, wobei die leitenden Beschichtungen einen spezifischen Widerstand aufweisen, der wenigstens doppelt so groß wie der spezifische Widerstand des leitenden Trägers (101, 102) ist.

7. Brennstoffzelle nach einem der vorhergehenden Ansprüche, wobei der erste Strömungskanal (106) gegenüber einer Kathode (112) des ersten galvanischen Elements liegt.

8. Verfahren zum Herstellen einer Brennstoffzelle, umfassend die Schritte zum:
- Bereitstellen einer Bipolarplatte (103) umfassend einen leitenden Träger (101, 102), der einen sich zwischen einem Lufteintritt (125) und einem Wasseraustritt (126) erstreckenden ersten Strömungskanal (106) abgrenzt;
- Befestigen einer ersten leitenden Beschichtung (141) auf dem leitenden Träger auf der Höhe des Lufteintritts des ersten Strömungskanals und Befestigen einer zweiten leitenden Beschichtung (142) auf dem leitenden Träger auf der Höhe eines Mittelteils des ersten Strömungskanals, wobei die zweite leitende Beschichtung einen elektrischen Oberflächenwiderstand aufweist, der größer als der der ersten leitenden Beschichtung ist;
- Anordnen der Bipolarplatte zwischen dem ersten und zweiten galvanischen Element (1) mit dem ersten Strömungskanal gegenüber dem ersten galvanischen Element.

9. Verfahren zum Herstellen einer Brennstoffzelle nach Anspruch 8, wobei das Befestigen der ersten und zweiten leitenden Beschichtung das Aufbringen von Polymermatrizen umfasst, in die leitende Partikel eingebettet sind.

10. Verfahren zum Herstellen einer Brennstoffzelle nach Anspruch 9, wobei die erste und zweite leitende Beschichtung eine gleiche Polymermatrix und gleiche leitende Partikel in unterschiedlichen Anteilen umfassen.

## Claims

1. Fuel cell (2), **characterized in that** it includes:
- first and second electrochemical cells (1);
- a bipolar plate (103) arranged between the first and second electrochemical cells, including a conductor support (101, 102) delimiting a first flow channel (106) facing the first electrochemical cell and extending between an air inlet (125) and a water outlet (126), and including a first conductive coating (141) attached to the conductor support at the air inlet of the first flow channel and including a second conductive coating (142) attached to the conductor support at a median portion of the first flow channel, the second conductive coating exhibiting a surface electrical resistance greater than that of the first conductive coating.

2. Fuel cell (2) according to Claim 1, in which the bipolar plate (103) includes a third conductive coating (43) attached to the conductor support (101, 102) at the water outlet of the first flow channel, the second conductive coating exhibiting a surface electrical resistance greater than that of the third conductive coating.

3. Fuel cell (2) according to Claim 1 or 2, in which said conductive coatings (141, 142) each include a polymer matrix and conductive particles embedded in the polymer matrix.

4. Fuel cell according to Claim 3, in which said first and second conductive coatings include the same polymer matrix and the same conductive particles in different proportions.

5. Fuel cell according to any one of the preceding claims, in which the second conductive coating (142) exhibits a surface electrical resistance at least double that of the first conductive coating.

6. Fuel cell according to any one of the preceding claims, in which said conductive coatings exhibit a resistivity at least double the resistivity of the conductor support (101, 102).

7. Fuel cell according to any one of the preceding claims, in which the first flow channel (106) is facing a cathode (112) of the first electrochemical cell.

8. Method for producing a fuel cell, including the steps of:
- providing a bipolar plate (103) including a conductor support (101, 102) delimiting a first flow channel (106) extending between an air inlet (125) and a water outlet (126);
- attaching a first conductive coating (141) to the conductor support at the air inlet of the first flow channel and attaching a second conductive coating (142) to the conductor support at a median portion of the first flow channel, the second conductive coating exhibiting a surface electrical resistance greater than that of the first conductive coating;
- arranging the bipolar plate between the first and second electrochemical cells (1), with the first flow channel facing the first electrochemical cell.

9. Method for producing a fuel cell according to Claim 8, in which the attachments of the first and second conductive coatings include the deposition of polymer matrices in which conductive particles are embedded.

10. Method for producing a fuel cell according to Claim 9, in which said first and second conductive coatings include the same polymer matrix and the same conductive particles in different proportions.
